# EUROPEAN PATENT SPECIFICATION

(11) **EP 2 743 128 B1**
(45) Date of publication and mention of the grant of the patent: **19.02.2020**
(21) Application number: 13196488.4
(22) Date of filing: 10.12.2013
(51) Int. Cl.: B60Q 1/24, F21S 41/19, F21S 41/143, F21S 41/29, F21S 41/20, F21S 41/39, F21S 41/32, F21S 45/10, F21S 45/49, F21S 45/47, B60Q 1/04, F21V 15/04

(54) **Lighting apparatus having angle indicating means**
Beleuchtungsvorrichtung mit Winkelanzeigeelementen
Appareil d'éclairage doté de moyens d'indication d'angle

(30) Priority: 11.12.2012 KR 20120143197
(43) Date of publication of application: 18.06.2014
(73) Proprietor: Vision X Asia Co., Ltd., Incheon-shi 403-030 (KR); Ko, In-hong, Seoul 135-971 (KR)
(72) Inventor: Ko, In-Hong, 135-971 Seoul (KR)
(74) Representative: Betten & Resch

(56) References cited:
- EP-A1- 2 206 628
- WO-A1-2009/081382
- AU-A4- 2009 101 168
- CN-A- 101 988 694
- KR-B1- 100 997 746
- KR-U- 20090 004 948
- KR-U- 20100 004 444
- US-A- 2 166 394
- US-A- 4 075 470
- US-A- 4 410 933
- US-A- 5 613 765
- US-A- 5 860 734
- US-A1- 2008 013 331

## Description

### BACKGROUND OF THE INVENTION

### 1. Field of the Invention

The present invention relates, in general, to lighting apparatuses having angle indicating means and, more particularly, to a lighting apparatus having an angle indicating means, which is mounted to various types of vehicles or equipment, such as an SUV vehicle mainly driven on a rough road, a construction vehicle, mining equipment or a heavy vehicle for construction to secure illumination at night, and which allows an irradiation angle of a light source to be easily and conveniently adjusted depending on various driving conditions, thus ensuring stability of an angle adjusted state, and which can be rotated even at 360 degrees, thus adapting to a site situation and reliably satisfying needs of consumers.

### 2. Description of the Related Art

Currently, traditional incandescent lamps, fluorescent lamps, halogen lamps, and even special lamp such as HID lamps are being replaced with LED lamps.

Since the LED lamp is small, light, emits little heat, is semi-permanent, and has fast response characteristics, pulse operation characteristics, and optical-power control characteristics by current, the LED lamp has become popular. Technologies related to control characteristics, heat dissipation, and high luminance are continuously being developed.

As long as there is no government regulation, the LED lamp is usually adopted to special lighting fields.

Related art dealing with angle indicating means that are applied to various lighting apparatuses are as follows:
First, Korean U.M. Registration No. 20-0445406 (registered on July 20, 2009) was proposed, which is entitled "Angle adjusting Device for Lighting Apparatus".

The cited document relates to the angle adjusting device for the lighting apparatus, which is intended to adjust and maintain the angle of the lighting apparatus so as to illuminate a desired region and obtain lighting effects.

However, in the cited document, the lighting apparatus is simply mounted to a support, and the support and the lighting apparatus are mainly installed in a place where vibrations or shocks do not occur, so that this lighting apparatus is suitable for a factory, a physical plant, a flower garden, etc. Hence, this is irrelevant to a technology that enables convenient angle adjustment and offers stability when fixed in an adjusted state.

Further, Korean Patent Laid-Open Publication No. 10-2010-0100986 (published on Sep. 15, 2010) was proposed, which is entitled "LED-Based Lighting Apparatus for Illuminating Large Structure".

The cited document is intended to provide a fixture for a lighting apparatus so as to offer a full-spectrum lighting source that is good in performance and robust as LED technology is developed.

This cited fixture for mounting a lighting unit includes a yoke base and a pair of yoke arms attached thereto. However, it is also installed in a place where vibrations or shocks do not occur.

Furthermore, Korean Patent No. 10-0997746 (registered on Nov. 25, 2010) was proposed, which is entitled "LED Lighting Apparatus Capable of Changing Irradiation Angle".

The cited document relates to the LED lighting apparatus, which is capable of changing an irradiation angle in response to forward and backward movement of a lens assembly obtained by mounting lens elements to a fixed panel, and is capable of adjusting the irradiation angle, and besides is superior in heat dissipating performance, thus being suitable for a light projector.

However, as explicitly described in the document, it is suitable for port lighting, a large factory, an indoor or outdoor physical plant, etc., according to the purpose of the light projector.

In view of the characteristics of the cited document, an angle adjusting means is applied to a housing having the LED assembly therein, and gradations are marked thereon. By performing a simulation depending on the characteristics of an installation locale, a horizontal angle and a vertical angle are previously adjusted. Thereby, after the apparatus is mounted to a desired position of a site, only a fine control is performed. In such a state, the apparatus is utilized as the light projector. This is suitable for a final aiming operation. This technology is also suitable for a place where vibrations or shocks do not occur.

CN 101 988 694 A relates to an adjustable irradiating lamp. The adjustable irradiating lamp comprises a lamp body and a bracket which is used for installing the lamp body; a fixed shaft is arranged at the side face of the lamp body; the bracket and the lamp body are rotatably connected through the fixed shaft; the irradiating lamp also comprises an angle adjustment plate with an angle identification sleeved on the fixed shaft; and a coupling end of the bracket is provided with an angle indicating member used for indicating an adjustment angle corresponding to the angle adjustment plate.

US 5 613 765 A discloses a headlight mounting apparatus for a headlight having a bulb mounted therein. The subject headlight mounting arrangement has a mounting portion integral with the headlight, a retaining mechanism and associated hardware, and a grommet arrangement of unique cross-sectional configuration which alters the frequency of vibration to a value significantly less than the natural frequency of vibration of the headlight bulb filament.

### SUMMARY OF THE INVENTION

Accordingly, the present invention has been made keeping in mind the above problems occurring in the related art, and an object of the present invention is to provide a lighting apparatus, which adopts an angle indicating means, and is mounted to various types of vehicles or equipment, such as an SUV vehicle mainly driven on a rough road, a construction vehicle, mining equipment or a heavy vehicle for construction to secure illumination at night, thus ensuring a stable fixing force to prevent an angle adjusted state from being changed even if vibrations are generated under various driving conditions.

Another object of the present invention is to provide a lighting apparatus, which applies a shock absorbing assembly to a body, thus protecting an angle adjusting means from vibrations, and which prevents a bolt from being loosened from an internal threaded portion, as if a spring washer were applied, due to inherent elasticity of a shock absorbing member of the shock absorbing assembly.

A further object of the present invention is to provide a lighting apparatus, which ensures good coupling ability and assemblability for a binding member, a shock absorbing member, and a second fixing member of a shock absorbing assembly, and which further includes an end plate on a mounting means for fixing a body of the lighting apparatus to an object (e.g. a vehicle), and in which a fastening plate of a mounting bracket constituting the mounting means for fixing the body to the object is interposed between a mounting plate constituting an angle indicating means and an end plate, thus considerably increasing a coupling ability.

The present invention is defined in the independent claim. The dependent claims define embodiments of the present invention.

A lighting apparatus having an angle indicating means, includes a light source; a body accommodating the light source therein; and a mounting means fixing the body to an object, wherein the mounting means includes a mounting bracket, the mounting bracket having a connecting plate, and a fastening plate connected to each of opposite ends of the connecting plate in such a way as to be bent, with a rotary hole formed in the fastening plate, the lighting apparatus further including an angle indicating means between the fastening plate and the body.

In the lighting apparatus having the angle indicating means, the angle indicating means may include a mounting plate disposed between the fastening plate and the body and having an annular groove, and an angle indicating plate coupled to the annular groove of the mounting plate.

The mounting means may further include an end plate disposed outside the fastening plate of the mounting bracket.

Preferably, the fastening plate of the mounting bracket may include a rotary hole, and the end plate may include an annular guide protrusion that is seated in the rotary hole of the fastening plate.

As is apparent from the above description, the lighting apparatus having the angle indicating means is advantageous in that it adopts an angle indicating means that can be freely and easily adjusted, and it is mounted to various types of vehicles or equipment, such as an SUV vehicle mainly driven on a rough road, a construction vehicle, mining equipment or a heavy vehicle for construction to secure illumination at night, thus ensuring a stable fixing force to prevent an angle adjusted state from being changed even if vibrations are generated under various driving conditions, and it applies a shock absorbing assembly to a body, thus protecting an angle adjusting means from vibrations, and it prevents a bolt from being loosened from an internal threaded portion, as if a spring washer were applied, due to inherent elasticity of a shock absorbing member of the shock absorbing assembly, and it ensures good coupling ability and assemblability for a binding member, a shock absorbing member, and a second fixing member of a shock absorbing assembly, and it further includes an end plate on a mounting means for fixing a body of the lighting apparatus to an object (e.g. a vehicle), and a fastening plate of a mounting bracket constituting the mounting means for fixing the body to the object is interposed between a mounting plate constituting an angle indicating means and an end plate to considerably increase a coupling ability, thus allowing an irradiation angle of a light source to be easily and conveniently adjusted depending on various driving conditions, ensuring stability of an angle adjusted state, and enabling the lighting apparatus to be rotated even at 360 degrees and thereby adapting to a site situation and reliably satisfying needs of consumers.

### BRIEF DESCRIPTION OF THE DRAWINGS

The above and other objects, features and advantages of the present invention will be more clearly understood from the following detailed description taken in conjunction with the accompanying drawings, in which:
FIGS. 1A to 1C illustrate a lighting apparatus having an angle indicating means according to the present invention in various perspective views and a photograph; and
FIGS. 2 and 3 are exploded perspective views illustrating the lighting apparatus having the angle indicating means according to the present invention, when seen in different directions.

### DESCRIPTION OF PREFERRED EMBODIMENTS

Hereinafter, the present invention will be described in detail with reference to the accompanying drawings.

Since the present invention may be variously changed and have several shapes, aspects (or embodiments) of the present invention will be described in detail herein. However, it should be understood that the present invention is not limited to a specific embodiment, but embraces all changes, equivalents, and substitutes within the technical idea and scope of the present invention.

The same reference numerals throughout the drawings, that is, the same reference numerals in a second digit and a first digit, or in a second digit, a first digit, and an alphabet character denote elements having the same or similar function. If there is no special mention, the members denoted by the reference numerals are to be comprehended as the members complying with the above-mentioned reference scheme.

For clarity and convenience of description, the size or thickness of components shown in the drawings may be expressed to be exaggeratedly large (or thick) or small (or thin), or may be simplified. Furthermore, it should not be interpreted that the scope of this invention is limited to this size or thickness.

Terms employed herein are for the purpose of description of particular aspects (or embodiments), and are not intended to limit the present invention. Further, the singular forms "a" and "an" include plural referents unless the context clearly dictates otherwise. In this description, it should be understood that terms such as "include" or "comprise" are inclusive of characteristics, numerals, steps, operations, components, parts or combination thereof, but are not exclusive of one or more different characteristics, numerals, steps, operations, components, parts or combination thereof.

Unless the context clearly defines otherwise, all terms or words used herein have the same meaning as common meanings understood by those skilled in the art. Terms defined in a dictionary are to be interpreted as having the same meaning as meanings used in the related art, and should not be interpreted ideally or excessively unless this application clearly defines otherwise.

The terms "first", "second", etc. are only used to distinguish one component from another component, and are not restricted by an order in which the components are manufactured. These may be varied in the description and claim.

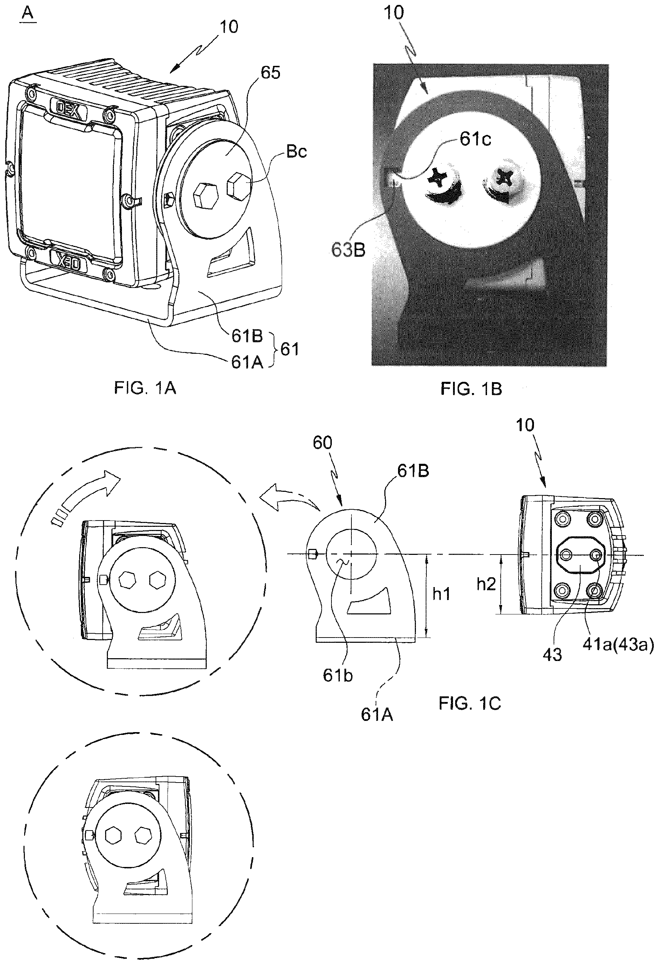

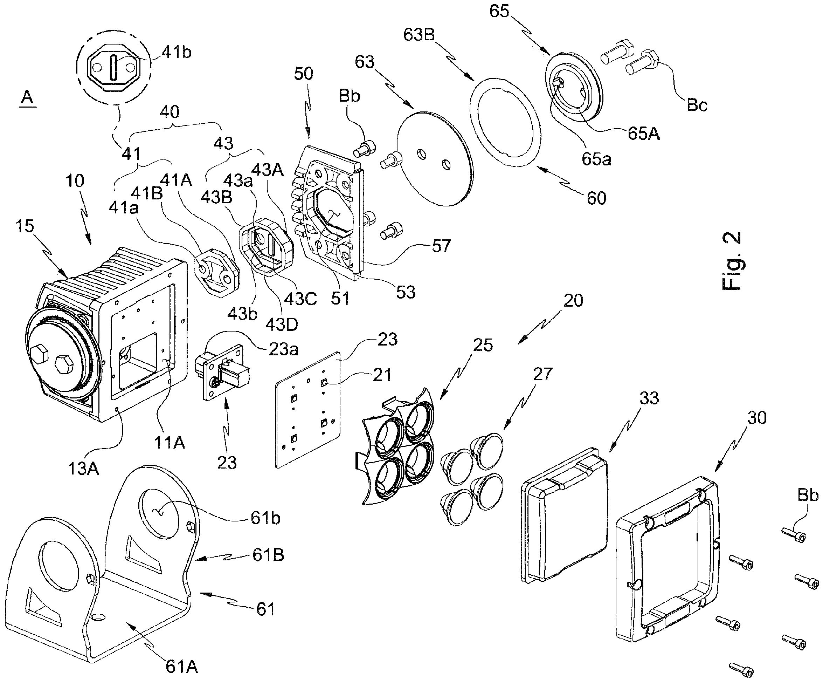

For convenience when various couplings A of the lighting apparatus having the angle indicating means according to the present invention are described, directions are roughly specified in FIGS. 1A to 1C and FIG. 2.

As seen in the drawings, the lighting apparatus is divided into upper and lower portions, left and right portions, and front and rear portions. A portion between left and right side surfaces is referred to as an inner portion. Based on the specified direction, the lighting apparatus will be explained in the detailed description related to another drawing and claim.

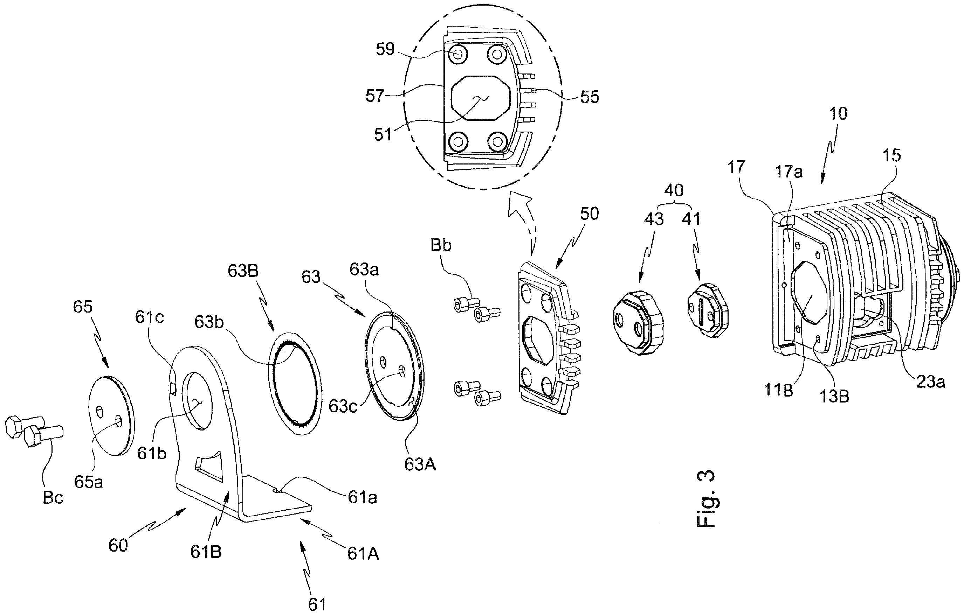

FIG. 1A is a perspective view of the lighting apparatus, FIG. 1B is a photograph corresponding to a side view, FIG. 1C is a view showing the lighting apparatus when a body rotated at 360 degrees, and FIGS. 2 and 3 are exploded perspective views seen from different directions. As shown in the drawings, the lighting apparatus A having the angle indicating means according to the present invention mainly includes a light source 20, a body 10 accommodating the light source 20 therein, a mounting means 60 fixing the body 10, particularly the lighting apparatus to an object (e.g. a vehicle), and the angle indicating means disposed between the body 10 and the mounting means 60 to indicate an angle adjusted state of the body 10, namely, the light source 20.

As shown in FIGS. 2 and 3, the body 10 includes a first mounting portion 11A, second mounting portions 11B, first and second fastening portions 13A and 13B, and a heat dissipating portion 15 having a plurality of heat dissipation fins to enlarge a heat dissipation area of a rear surface.

Further, the second mounting portions 11B are provided on both sides of the body 10. A shock absorbing assembly 40 is disposed on each second mounting portion 11B to mitigate vibrations or shocks transmitted from the object through the mounting means for fixing the lighting apparatus to the object (e.g. the vehicle). Locking steps 17 are provided on front surfaces of the second mounting portions 11B to enable the convenient assembly of a second fixing member 50 for coupling the shock absorbing assembly 40 to the second mounting portion 11B of the body 10 and to specify a coupling position. A seating recess 17a is provided in a rear surface of the locking step 17 (see, the rear view of the body encircled with a dashed dotted line at an upper portion of FIG. 2) and engages with a seating protrusion 57 of the second fixing member 50.

Meanwhile, the light source 20 accommodated in the body 10 does not comprise one simple light source device, particularly the LED, but comprises an LED 21, particularly a high luminance LED that has high availability and satisfaction as specific night lighting. In order to satisfy a luminance condition, a PCB 21A on which a plurality of LEDs 21 is mounted is utilized. The PCB 21A is disposed on the first mounting portion of the body 10, and is preferably a light source assembly so that it may be fixedly mounted to a mounter 25.

A power block 23 that may include a control chip such as an SMPS has on a rear surface thereof a socket 23a or a connector to which a power line is connected. After the power block 23 is connected to the PCB, it is fastened to the mounter 25. A reflector 27 is coupled to every mounting recess 25b (the number of mounting recesses is four to correspond to the number of LEDs) of the mounter 25 to enhance the luminance and linearity of light. Such a mounter assembly, in other words, the light source 20 can be easily assembled by inserting a fastening hook 25a of the mounter 25 into a fastening hole (not designated) of the body 10.

In such a coupled state, the assembly is covered with a window 33. A locking flange 33A of the window 33 is restrained by a first fixing member 30. Bolts Ba are inserted into four corner holes 31 of the first fixing member 30. Each bolt is fastened to a first fastening portion 13A around the first mounting portion of the body 10, namely, an internal threaded portion. Various waterproofing means such as a packing ring may be provided between the window 33 and the body 10 to ensure a waterproofing property.

The mounting means 60 for fixing the body 10 to the object mainly includes a mounting bracket 61. This includes a connecting plate 61A, and fastening plates 61B connected to both ends of the connecting plate 61A in such a way as to be bent.

An insertion hole 61a is formed in the connecting plate 61A, so that a fastening means such as a mounting bolt is inserted into the insertion hole 61a to mount the lighting apparatus to the object (e.g. the vehicle).

A rotary hole 61b is formed in each fastening plate 61B to enable the angle adjustment of the body 10, namely, the light source 20. Particularly according to a specific relation between the height of the connecting plate 61A of the mounting bracket 61 and the height of the body 10, the light source may be rotated at 360 degrees.

Moreover, the mounting means 60 prevents the body or the second fixing member from being damaged by friction between the body or the second fixing member and the mounting-bracket fastening plate 61B, due to the mounting plate 63 disposed between the fastening plate 61B of the mounting bracket and the second fixing member 50 (such a configuration is excellent to prevent abrasion that may be more serious, if it is made of aluminum or aluminum alloy to achieve lightness).

When the bolt Bc is tightened in order to hold the adjusted state after the angle of the light source is adjusted by the angle adjusting means, the bolt is not prevented from being in direct contact with the body (or the second fixing member), so that a damage to the lighting apparatus can be prevented despite the repetitive angle adjustment. Further, when the bolt is loosened to some extent to adjust the angle, a smooth angle adjustment is ensured.

The above-mentioned protection characteristics, convenient angle adjustment, and smoothness can be further enhanced due to the end plate 65 disposed outside the fastening plate 61B of the mounting bracket 61.

The binding member and the shock absorbing member of the shock absorbing assembly 40, which will be described later, are fastened to a mounting plate 63 constituting the angle indicating means together with an angle indicating plate 63B, via a bolt Bc. To this end, the end plate 65 has a hole 65a. An annular guide protrusion 65A is provided in the end plate 65, so that the guide protrusion is inserted into the rotary hole 61b of the fastening plate of the mounting bracket.

Hence, although the body 10 is not directly axially coupled to the center of the rotary hole 61b, the body can smoothly rotate about the center of the rotary hole.

Even when the lighting apparatus is heavier than general lighting equipment to ensure high luminance, a load generated by the rotation of the body, including a centrifugal force, is dispersed by the annular guide protrusion 65A of the end plate having a larger outer diameter (as compared to a fixing configuration using a single shaft pin), thus increasing the durability of the lighting apparatus.

Moreover, the mounting plate 63 constituting the angle indicating means has an annular groove 63A around the hole 63c, with notches 63a symmetrically formed on two opposite sides of the annular groove 63A.

The angle indicating plate 63B is mounted to the annular groove 63A (projections 63b are fitted into the notches 63a to ensure the coupling in a specific direction).

The angle adjusted state of the body, namely, the light source can be observed through an angle observation hole 61c of the fastening plate of the mounting bracket (the angle observation hole has an edge to allow the angle to be more precisely observed). Such an adjusted angle can be seen in the photograph of FIG. 1B corresponding to the side view.

Meanwhile, the shock absorbing assembly 40 not only performs its original function but also protects the angle adjusting means from vibrations (the angle adjusted state can be maintained even under vibrations or shocks).

The shock absorbing member of the shock absorbing assembly serves to prevent the bolt from being loosened from the internal threaded portion due to its inherent elasticity, as if a spring washer were applied between the bolt and the nut.

Moreover, the lighting apparatus ensures good coupling ability and assemblability for the binding member, the shock absorbing member, and the second fixing member of the shock absorbing assembly, and further includes the end plate on the mounting means for fixing the body of the lighting apparatus to the object (e.g. a vehicle), and besides, the fastening plate of the mounting bracket constituting the mounting means for fixing the body to the object is interposed between the mounting plate constituting the angle indicating means and the end plate to considerably increase a coupling ability, thus allowing the irradiation angle of the light source to be easily and conveniently adjusted depending on various driving conditions, ensuring the stability of the angle adjusted state, and enabling the lighting apparatus to be rotated even at 360 degrees and thereby adapting to a site situation and reliably satisfying needs of consumers.

To be more specific, the end plate 65 is stably coupled to the rotary hole 61b formed in the fastening plate 61B of the mounting bracket 61 via the annular guide protrusion 65A. After the bolt Bc inserted into the hole 65a of the end plate sequentially passes through the hole 63c of the mounting plate 63 and the hole 43a of the shock absorbing member 43, the bolt is fastened to a binding portion 41a of the binding member 41 of the shock absorbing assembly 40, namely, a threaded hole.

Further, the shock absorbing assembly 40 is stably coupled to the second mounting portion 11B of the body 10 via the second fixing member 50.

In the state where the mounting bracket 61 of the mounting means 60 is fixed to the object, the outward rotation of the body 10, namely, the light source 20 leads to the rotation of the mounting plate 63 of the angle indicating means.

The angle indicating plate 63B mounted to the annular groove 63A of the mounting plate is rotated (idle rotation is prevented by the engagement of the notch 63a with the projection 63b).

A change in angle can be observed by the gradation of the angle indicating plate 63B via the angle observation hole 61c of the fastening plate 61B of the mounting bracket. This is shown in the photograph of FIG. 1B corresponding to the side view.

As seen in FIG. 1C showing the rotation of the body, the body 10, namely, the light source 20 can be rotates at 360 degrees according to the relation between the height of the connecting plate 61A of the mounting bracket 61 and the height of the body.

To be more specific, a height h1 from the upper surface of the connecting plate 61A of the mounting bracket 61 to the center line of the rotary hole 61b of the fastening plate 61B is higher than half of the maximum height of the body 10, namely, a height h2 from a center of a line (it corresponds to an imaginary rotary axis of the body and is identical with the center line of the rotary hole 61b when the body is coupled to the mounting bracket) to a lower end, the line connecting the holes 43a or binding portions 41a of the shock absorbing member 43 or binding member 41 of the shock absorbing assembly 40 that is coupled to the first mounting portion 11A of the body. Such a configuration allows the light source (namely, the body) to be rotated at 360 degrees. Upper and lower portions encircled with dashed dotted lines on the left side of FIG. 1C show that the body rotates at 180 degrees.

Next, the shock absorbing assembly will be described in detail.

That is, the shock absorbing assembly 40 disposed on each of the second mounting portions 11B provided on both sides of the body 10 includes the binding member 41 and the shock absorbing member 43.

For the angle adjusting properties of the lighting apparatus, it is preferable that the body 10, the mounting means 60 and the mounting plate 63 on which the angle indicating plate 63B is disposed be assembled in a specific direction.

The binding member 41, which is a metal member (aluminum or aluminum alloy is preferred to ensure lightness) that provides the internal threaded portion and is manufactured by die casting, is provided with two binding portions 41a, particularly internal threaded holes. The location and number of the binding portions are determined to conform to the hole 43a of the shock absorbing member 43, the hole 63c of the mounting plate 63 and the hole 65a of the end plate.

The first flange 41B of the binding member 41 has a non-circular shape, particularly a hexagonal shape, and is coupled to a hexagonal recess of the second mounting portion 11B of the body.

An exposed face 41A also protrudes from the first flange to be integrated therewith, and has a non-circular shape, particularly a hexagonal shape. A female or male first direction specifying member 41b (especially, this is a male member, namely, a protrusion) is provided on the hexagonal exposed face to couple the binding member to the shock absorbing member 43 in a specific coupling direction.

In order to correspond to the female or male first direction specifying member 41b, the shock absorbing member 43 has a male or female second direction specifying member (especially, this is a female member, namely, a groove).

Next, as shown in FIG. 3, the shock absorbing member 43 of the shock absorbing assembly interposed between the binding member and the second fixing member 50 is provided with first and second receiving portions 43C and 43D that correspond to the exposed face 41A and the first flange 41B of the binding member, respectively, to receive the binding member 41 therein.

Further, the shock absorbing member 43 is provided with a non-circular, particularly hexagonal second flange 43B. An insert portion 43A is provided in the second flange. The insert portion also has a non-circular, particularly hexagonal shape to ensure a coupling in a specific direction. The insert portion is provided with two holes 43a. A second direction specifying member is provided in the center of the insert portion in such a way as to be within an area of the first receiving portion 43C, and is coupled to the first direction specifying member 41b.

The second fixing member 50 is assembled with the body 10 by fastening a hole 59 to the second fastening portion 13B around the second mounting portion 11B of the body 10, particularly the internal threaded portion, via the bolt Bb. In order to impart unity with the heat dissipating portion 15 in function, a heat dissipating portion 55 is provided on the rear surface of the second fixing member 50.

The second fixing member 50 also has a seating protrusion 57 that engages with the seating recess 17a formed on the rear surface of the locking step 17 of the body to ensure convenient assembly, a stable assembled state, and direction specificity.

Further, an exposure hole 51 is formed in a central portion of the second fixing member, so that the insert portion 43A of the shock absorbing member is coupled to the exposure hole 51 in such a way as to be exposed to the outside.

Moreover, as shown in FIG. 3, a removal prevention step 53A is provided along an inner circumference of the exposure hole 51, so that the second flange 43B of the shock absorbing member 43 is caught by the removal prevention step.

The first flange 41B of the binding member 41 coupled to the second receiving portion situated on a surface of the second flange 43B is also caught by the removal prevention step, thus ensuring the stable assembly.

Further, since the holes of the insert portion 43A of the shock absorbing member 43 are exposed through the exposure hole 51 of the second fixing member 50, and the binding portions 41a of the binding member 41, that is, the two internal threaded holes are exposed, the second fixing member 50 is fastened to the holes 63c of the mounting plate 63 and the holes 65a of the end plate, via the bolts Bc.

Furthermore, the fastening plate 61B of the mounting bracket 61 constituting the mounting means 60 is interposed between the mounting plate 63 and the end plate 65.

Consequently, all of the body, the shock absorbing assembly, and the mounting means are conveniently and stably coupled with each other.

In the foregoing description, the specification of the LED, luminance characteristics, the size and weight of the body, and specific materials of respective components as well as prior art known to those skilled in the art are omitted. However, those skilled in the art can easily infer and carry out them.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. A lighting apparatus (A) having angle indicating means, comprising:
a light source (20);
a body (10) accommodating the light source (20) therein; and
mounting means (60) fixing the body (10) to an object,
wherein the mounting means (60) comprises a mounting bracket (61), the mounting bracket (61) having a connecting plate (61A), and a fastening plate (61B) connected to each of opposite ends of the connecting plate (61A) in such a way as to be bent, with a rotary hole (61b) formed in the fastening plate (61B),
the lighting apparatus (A) further comprising:
angle indicating means provided between the fastening plate (61B) and the body (10),
**characterized in that** the body (10) comprises:
a first mounting portion (11A) provided to mount the light source (20);
second mounting portions (11B) provided on opposite sides of the body (10) to mount shock absorbing assemblies (40) mitigating vibrations or shocks transmission, with locking steps (17) provided on front surfaces of the second mounting portions (11B), and with seating recesses (17a) provided on rear surfaces of the locking steps (17) and engaging with seating protrusions (57) of a second fixing member (50); and
a heat dissipating portion (15) having a plurality of heat dissipation fins to enlarge a heat dissipation area of a rear surface,
the mounting means (60) further comprises an end plate (65) disposed outside the fastening plate (61B) of the mounting bracket (61),
the fastening plate (61B) of the mounting bracket (61) comprises the rotary hole (61b), and the end plate (65) comprises an annular guide protrusion (65A) that is seated in the rotary hole (61b) of the fastening plate (61B),
the angle indicating means comprises:
a mounting plate (63) disposed between the fastening plate (61B) and the body (10), and having an annular groove (63A); and
an angle indicating plate (63B) coupled to the annular groove (63A) of the mounting plate (63),
wherein the annular groove (63A) of the mounting plate (63) is provided with notches (63a) symmetrically formed on two opposite sides of the annular groove (63A), and
the angle indicating plate (63B) is provided with projections (63b) fitted into the notches (63a).

2. The lighting apparatus (A) as set forth in claim 1, wherein the body (10) comprises first and second mounting portions (11A, 11B), and the first and second fastening portions (13A, 13B),
a shock absorbing assembly (40) is disposed on each of the second mounting portions (11B) provided on the opposite sides of the body (10),
a fixing member (50) is further provided to be coupled to the second fastening portion (13B) of the body (10) and thereby fix the shock absorbing assembly (40),
the shock absorbing assembly (40) comprises a binding member (41) having a binding portion (41a), and a shock absorbing member (43) interposed between the binding member (41) and the fixing member (50).

3. The lighting apparatus (A) as set forth in claim 2, wherein, in the shock absorbing assembly (40), the binding member (41) comprises a first flange (41B) around the binding portion (41a) for preventing removal of the shock absorbing assembly (40),
the shock absorbing member (43) surrounds and receives an exposed face of the binding member (41), and comprises an insert portion (43A) having a hole (43a) corresponding to the binding portion (41a), and a second flange (43B) provided around the insert portion (43A) to receive the first flange (41B), and
the fixing member (50) comprises an exposure hole (51) through which the insert portion (43A) of the shock absorbing member (43) is exposed, and a removal prevention step (53A) formed along an inner circumference of the exposure hole (51) and catching the second flange (43B),
wherein a female or male first direction specifying member (41b) is provided on the exposed face of the first flange (41B) of the binding member (41), and
the shock absorbing member (43) is provided with a male or female second direction specifying member coupled to the first direction specifying member (41b).

## Patentansprüche

1. Beleuchtungsgerät (A) mit einer Winkelanzeigeeinrichtung, umfassend:
eine Lichtquelle (20);
einen Körper (10), der die Lichtquelle (20) darin aufnimmt; und
eine Montageeinrichtung (60), die den Körper (10) an einem Objekt befestigt,
wobei die Montageeinrichtung (60) eine Montageklammer (61) umfasst, wobei die Montageklammer (61) eine Verbindungsplatte (61A) aufweist sowie eine Befestigungsplatte (61B), die mit jedem von entgegengesetzten Enden der Verbindungsplatte (61A) derart verbunden ist, dass sie gekrümmt ist, wobei ein Drehloch (61b) in der Befestigungsplatte (61B) gebildet ist,
wobei das Beleuchtungsgerät (A) ferner umfasst:
eine Winkelanzeigeeinrichtung, die zwischen der Befestigungsplatte (61B) und dem Körper (10) vorgesehen ist,
**dadurch gekennzeichnet, dass** der Körper (10) umfasst:
einen ersten Montagebereich (11A), der zum Montieren der Lichtquelle (20) vorgesehen ist;
zweite Montagebereiche (11B), die an entgegengesetzten Seiten des Körpers (10) zur Montage von Stoßabsorptionsanordnungen (40) vorgesehen sind, die die Übertragung von Vibrationen oder Stößen abschwächen, wobei Sperrstufen (17) an vorderen Oberflächen der zweiten Montagebereiche (11B) vorgesehen sind, und wobei Sitzaussparungen (17a) an hinteren Oberflächen der Sperrstufen (17) vorgesehen sind und an Sitzvorsprüngen (57) eines zweiten Befestigungselements (50) angreifen; und
einen Wärmeabführbereich (15) mit einer Mehrzahl von Wärmeabführrippen, um eine Wärmeabführfläche einer hinteren Oberfläche zu vergrößern,
wobei die Montageeinrichtung (60) ferner eine Endplatte (65) umfasst, die außerhalb der Befestigungsplatte (61B) der Montageklammer (61) angeordnet ist,
wobei die Befestigungsplatte (61B) der Montageklammer (61) das Drehloch (61b) umfasst, und wobei die Endplatte (65) einen ringförmigen Führungsvorsprung (65A) umfasst, der in dem Drehloch (61b) der Befestigungsplatte (61B) sitzt,
wobei die Winkelanzeigeeinrichtung umfasst:
eine Montageplatte (63), die zwischen der Befestigungsplatte (61B) und dem Körper (10) angeordnet ist und eine ringförmige Rille (63A) aufweist; und
eine Winkelanzeigeplatte (63B), die mit der ringförmigen Rille (63A) der Montageplatte (63) gekoppelt ist,
wobei die ringförmige Rille (63A) der Montageplatte (63) mit Kerben (63a) versehen ist, die symmetrisch an zwei entgegengesetzten Seiten der ringförmigen Rille (63A) gebildet sind, und
wobei die Winkelanzeigeplatte (63B) mit Vorsprüngen (63b) versehen ist, die in die Kerben (63a) passen.

2. Beleuchtungsgerät (A) nach Anspruch 1, wobei der Körper (10) erste und zweite Montagebereiche (11A, 11B) umfasst, und die ersten und zweiten Befestigungsbereiche (13A, 13B),
wobei eine Stoßabsorptionsanordnung (40) an jedem von den zweiten Montagebereichen (11B) angeordnet ist, vorgesehen an den entgegengesetzten Seiten des Körpers (10),
wobei ein Befestigungselement (50) ferner dazu vorgesehen ist, an den zweiten Befestigungsbereich (13B) des Körpers (10) gekoppelt zu sein und hierdurch die Stoßabsorptionsanordnung (40) zu befestigen, wobei die Stoßabsorptionsanordnung (40) ein Verbindungselement (41) mit einem Verbindungsbereich (41a) umfasst, sowie ein Stoßabsorptionselement (43), das zwischen dem Verbindungselement (41) und dem Befestigungselement (50) eingefügt ist.

3. Beleuchtungsgerät (A) nach Anspruch 2, wobei in der Stoßabsorptionsanordnung (40) das Verbindungselement (41) einen ersten Flansch (41B) um den Verbindungsbereich (41a) herum umfasst, um ein Entfernen der Stoßabsorptionsanordnung (40) zu verhindern,
wobei das Stoßabsorptionselement (43) eine exponierte Fläche des Verbindungselements (41) umgibt und aufnimmt und einen Einsetzbereich (43A) mit einem Loch (43a) entsprechend dem Verbindungsbereich (41a) umfasst, und wobei ein zweiter Flansch (43B) um den Einsetzbereich (A) herum vorgesehen ist, um den ersten Flansch (41B) aufzunehmen, und
wobei das Befestigungselement (50) ein Expositionsloch (51) umfasst, durch das hindurch der Einsetzbereich (43A) des Stoßabsorptionselements (43) exponiert ist, sowie eine Entfernungsverhinderungsstufe (53A), die entlang eines Innenumfangs des Expositionslochs (51) gebildet ist und den zweiten Flansch (43B) ergreift,
wobei ein weibliches oder männliches Erste-Richtung-Spezifizierungselement (41b) an der exponierten Fläche des ersten Flanschs (41B) des Verbindungselements (41) vorgesehen ist, und
wobei das Stoßabsorptionselement (43) mit einem männlichen oder weiblichen Zweite-Richtung-Spezifizierungselement versehen ist, das mit dem Erste-Richtung-Spezifizierungselement (41 b) gekoppelt ist.

## Revendications

1. Appareil d'éclairage (A) ayant un moyen d'indication d'angle, comprenant :
une source de lumière (20) ;
un corps (10) dans lequel est logée la source de lumière (20) ; et
un moyen de montage (60) fixant le corps (10) à un objet,
dans lequel le moyen de montage (60) comprend un support de montage (61), le support de montage (61) ayant une plaque de raccordement (61A), et une plaque de fixation (61B) raccordée à chacune d'extrémités opposées de la plaque de raccordement (61A) de manière à être courbée, avec un trou rotatif (61b) formé dans la plaque de fixation (61B),
l'appareil d'éclairage (A) comprenant en outre :
un moyen d'indication d'angle prévu entre la plaque de fixation (61B) et le corps (10),
**caractérisé en ce que** le corps (10) comprend :
une première portion de montage (11A) prévue pour monter la source de lumière (20) ;
des deuxièmes portions de montage (11B) prévues sur des côtés opposés du corps (10) pour monter des ensembles amortisseurs de choc (40) atténuant une transmission de vibrations ou de chocs, avec des décrochements de verrouillage (17) prévus sur des surfaces avant des deuxièmes portions de montage (11B), et avec des évidements d'assise (17a) prévus sur des surfaces arrière des décrochements de verrouillage (17) et s'engageant avec des saillies d'assise (57) d'un deuxième organe de fixation (50) ; et
une portion de dissipation de chaleur (15) ayant une pluralité d'ailettes de dissipation de chaleur pour agrandir une aire de dissipation de chaleur d'une surface arrière,
le moyen de montage (60) comprend en outre une plaque d'extrémité (65) disposée à l'extérieur de la plaque de fixation (61B) du support de montage (61),
la plaque de fixation (61B) du support de montage (61) comprend le trou rotatif (61b), et la plaque d'extrémité (65) comprend une saillie de guidage annulaire (65A) qui est assise dans le trou rotatif (61b) de la plaque de fixation (61B),
le moyen d'indication d'angle comprend :
une plaque de montage (63) disposée entre la plaque de fixation (61B) et le corps (10), et ayant une gorge annulaire (63A) ; et
une plaque d'indication d'angle (63B) accouplée à la gorge annulaire (63A) de la plaque de montage (63),
dans lequel la gorge annulaire (63A) de la plaque de montage (63) est pourvue d'encoches (63a) formées symétriquement sur deux côtés opposés de la gorge annulaire (63A), et
la plaque d'indication d'angle (63B) est pourvue de saillies (63b) ajustées dans les encoches (63a).

2. Appareil d'éclairage (A) selon la revendication 1, dans lequel le corps (10) comprend des première et deuxième portions de montage (11A, 11B), et les première et deuxième portions de fixation (13A, 13B),
un ensemble amortisseur de choc (40) est disposé sur chacune des deuxièmes portions de montage (11B) prévues sur les côtés opposés du corps (10),
un organe de fixation (50) est en outre prévu pour être accouplé à la deuxième portion de fixation (13B) du corps (10) et fixer ainsi l'ensemble amortisseur de choc (40),
l'ensemble amortisseur de choc (40) comprend un organe de liaison (41) ayant une portion de liaison (41a), et un organe amortisseur de choc (43) interposé entre l'organe de liaison (41) et l'organe de fixation (50).

3. Appareil d'éclairage (A) selon la revendication 2, dans lequel, dans l'ensemble amortisseur de choc (40), l'organe de liaison (41) comprend une première bride (41B) autour de la portion de liaison (41a) pour empêcher un enlèvement de l'ensemble amortisseur de choc (40),
l'organe amortisseur de choc (43) entoure et reçoit une face exposée de l'organe de liaison (41), et comprend une portion d'insert (43A) ayant un trou (43a) correspondant à la portion de liaison (41a), et une seconde bride (43B) prévue autour de la portion d'insert (43A) pour recevoir la première bride (41B), et
l'organe de fixation (50) comprend un trou d'exposition (51) à travers lequel la portion d'insert (43A) de l'organe amortisseur de choc (43) est exposée, et une étape anti-enlèvement (53A) formée le long d'une circonférence intérieure du trou d'exposition (51) et saisissant la seconde bride (43B),
dans lequel un premier organe de spécification de direction mâle ou femelle (41b) est prévu sur la face exposée de la première bride (41B) de l'organe de liaison (41), et
l'organe amortisseur de choc (43) est pourvu d'un second organe de spécification de direction mâle ou femelle accouplé au premier organe de spécification de direction (41b).
